# EUROPEAN PATENT APPLICATION

(11) **EP 4 368 522 A1**
(43) Date of publication of application: **15.05.2024**
(21) Application number: 23761040.7
(22) Date of filing: 12.06.2023
(51) Int. Cl.: B65B 13/18

(54) **PACKING METHOD AND PACKING MACHINE**

(30) Priority: 21.09.2022 JP 2022150433
(71) Applicant: Strapack Corporation, Chuo-ku Tokyo, 104-0061 (JP)
(72) Inventor: TATEISHI Fumitoshi, Yokohama-shi, Kanagawa 221-0864 (JP); MOMIYAMA Yuuki, Yokohama-shi, Kanagawa 221-0864 (JP)
(74) Representative: Lunzarová, Lucie
(86) International application number: PCT/JP2023/021788
(87) International publication number: WO 2024/062702

(57) **Abstract**

In a packing method, the band divided into blocks each having a length necessary for one packing of a package object in a longitudinal direction is used, and a mark is provided at a predetermined position in each of the blocks so as to arrange a boundary portion between the blocks on a blade provided in a sealing unit when the mark is detected at a detection position provided on a band feeding path of the packing machine. By performing a position alignment process of retracting the band by the roller unit from a state of which the band is fed until when at least one of the boundary portions passes over the blade, and terminating the retracting when the mark is detected at the detection position, the boundary portion is arranged above the blade, thereby the band can always be accurately cut at the boundary portion.

## Description

### [Field of the invention]

The present invention relates to a packing method performed by wrapping a belt-like object (hereinafter, collectively referred to as "band") such as a band, tape, or film made of synthetic resin such as polypropylene (hereinafter, referred to as "PP") and biaxially oriented polypropylene (hereinafter, referred to as "OPP"), paper, and other materials around a package object (objects to be strapped and packed), and a packing machine that performs the aforementioned packing method.

### [Background of the invention]

As a packing machine that performs packing by winding a band around a package object, there are known various packing machines, for example, a type of packing machine that wraps a PP band around a cardboard box or the like, and a packing machine called a "strapping machine" that is used for attaching (strapping) a strap including a resin film, such as an OPP film, and a paper band coated or laminated with a thermoplastic resin.

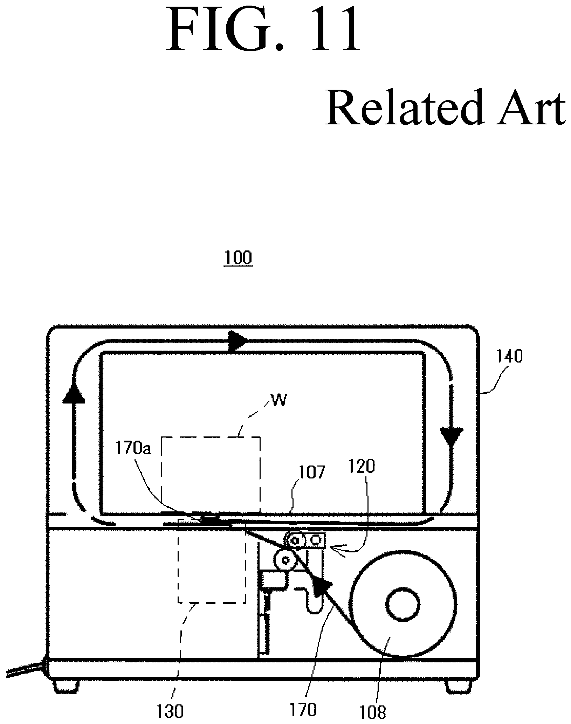

As such a packing machine, FIG. 11 shows a configuration example of a packing machine (strapping machine) used for attaching (strapping) the strap described above.

Compared to a case where the entire package object is wrapped with a resin film or the like, such packing using the strapping machine 100 can save resources, so that companies having a strong interest in environmental issues or the like are increasingly employing such a method for the product packaging.

This packing machine 100 includes a table 107 on which a package object W is placed, a band guide arch 140 straddled over the table 107, a roller unit 120 that pulls out and feeds a band 170 from a band roll 108 and pull back or retracts and tightens the fed band 170, and a sealing unit 130 arranged below the table 107 to perform gripping, welding, and cutting of the band 170.

In the packing machine 100 configured as described above, the band 170 fed to the table 107 by the roller unit 120 passes through the inside of the band guide arch 140 to form a loop, and then a leading edge 170a of the band 170 is inserted into a predetermined position of the sealing unit 130.

When a sensor (not shown) provided in the sealing unit 130 detects that the leading edge 170a of the band has been inserted into the predetermined position, the roller unit 120 stops, and supply of the band 170 ends.

Then, while the package object W is placed on the table 107, the sealing unit 130 grips the leading edge of the band, and the roller unit 120 retracts and tightens the band. Then, the band 170 released from the band guide arch 140 is wound around the outer circumference of the package object W.

As the band is wound around the package object W, the sealing unit 130 presses the trailing edge (supply end) of the band 170 so that the band wound around the package object W does not loosen, and the roller unit 120 stops to terminate the retracting. In addition, the sealing unit 130 welds and cuts the facing surfaces of overlapped portions of the band on the leading-edge side and the supply-edge side to complete the packing, so that the aforementioned processes are repeated.

In the operation of the packing machine 100 described above, methods of tightening the band using the roller unit 120 are generally classified into "stroke-based methods" and "torque-based methods".

In the "stroke-based methods", rotation of the roller in the tightening rotation direction is stopped by counting setting time with a timer, and the tightening is completed. The packing can be efficiently performed when package objects having the same size (outer circumferential length) are packed continuously. However, when package objects having different sizes are mixedly packed, it may be necessary to reset the timer whenever the size of the package object changes.

Meanwhile, in the "torque-based methods", a rotational torque of the roller is monitored. When the torque applied to the roller, which is wound around the package object and rotates in the tightening rotation direction, reaches a preset value, rotation of the roller is stopped to terminate the tightening.

For this reason, the "torque-based methods" are advantageous in being able to wind the band around the package object with a substantially constant tightening force regardless of a change in size, even when package objects having different sizes are mixedly packed. However, for example, when the material of the package object such as vegetables wrapped in films or cardboard changes, a user who neglects appropriate torque adjustment depending on the material may suffer from a packing failure caused by insufficient tightening, damage to the package object caused by excessive tightening, and the like.

Considering that the "stroke-based methods" and the "torque-based methods" have both advantages and disadvantages, a packing machine has also been proposed, in which both the "stroke-based method" and the "torque-based method" can be performed for tightening by a single packing machine, and a user can select which tightening method to apply depending on the applications of the packing machine (Patent Document 1).

### [Related Art Documents]

### [Patent Document]

[Patent Document 1] Japanese Patent KOKAI No. 2006-290380 (LOPI; automatically published after around 18 months from filing date regardless prosecution)

### [Summary of the invention]

### [Problems to be solved by the invention]

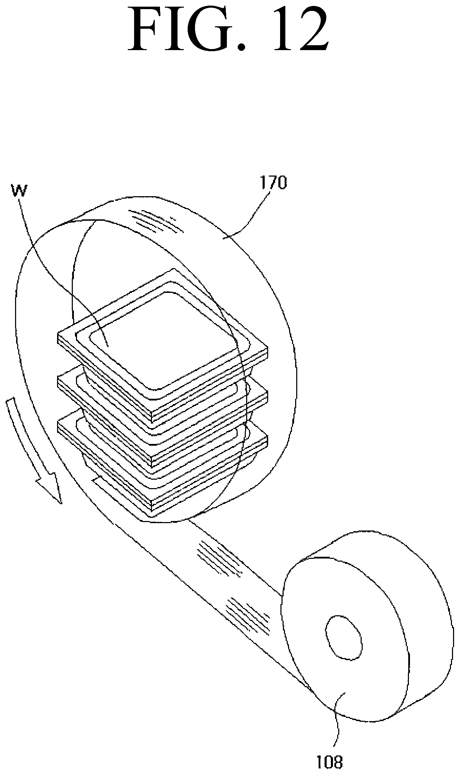

In the packing using the packing machine described above, for example, as shown in FIG. 12, a band is wound around as strapping around a packing container for a stack of one or more products (in the illustrated example, a packing container for a stack of three products) and the like in some cases.

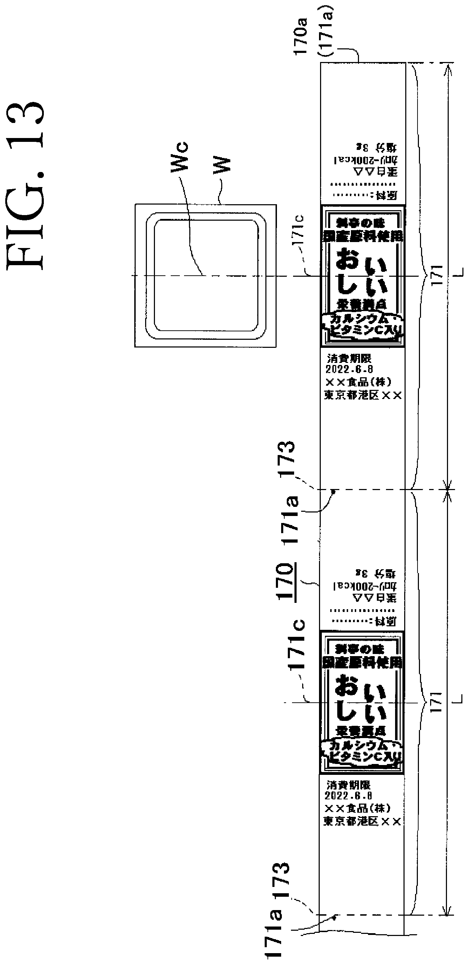

In such applications, for example, as shown in FIG. 13, decoration or information notification or the like is not printed on the packing container (box) itself, which is the package object W, but information such as a product logo, manufacturing date, expiration date, raw materials, manufacturer/seller, and ingredients is printed on the band 170 made of an OPP film or the like wound around the package object W as a strap in some cases.

In this case, as shown in FIG. 13, the longitudinal length of the band 170 is divided into blocks 171 each having a length L required for one packing (the length of the outer circumference of the package object plus an overlap margin). In addition, information such as a product logo, manufacturing date, expiration date, raw materials, manufacturer/seller, and ingredients described above is printed on each of the blocks 171 in advance.

In the packing using such a band 170, in order to arrange planned labeling at the planned position on the package object, for example, by placing a portion printed with a product logo mark or the like on the top portion of the package object W, which is easily visible to consumers, and placing a portion printed with information such as a manufacturing date, expiration date, raw materials, and ingredients on the side surface of the package, it is necessary to cut the leading edge of the band 170 so as to start at the starting edge 171a of the block 171, accurately wind and weld the band 170 around one package object W (in the illustrated example, three layers overlapping) in units of one block, and accurately cut the band 170 at the boundary portion 173 between the adjacent blocks 171, 171.

However, none of the conventional packing machines 100 has a function of cutting the leading edge of the band 170 to match the starting edge 171a of the block 171. In addition, it is necessary for an operator to manually cut a part of the band 170 using scissors or the like to match the leading edge 170a of the band 170 with the starting edge 171a of the block 171 when the leading edge 170a of the band 170 wound on a delivered band roll 108 does not match the starting edge 171a of the block 171, or when the cutting position shifts during a packing work, so that the leading edge 170a of the band 170 deviates from the starting edge 171a of the block 171.

Furthermore, in the packing process of the package object W, the band is cut after the tightening performed on the basis of the "stroke-based method" or "torque-based method" described above. Therefore, the band tightening length changes depending on a change of the tightening time caused by the timing set on the timer, an increase of a roller slip amount or band loosening caused by the torque setting, or a change of the deformation amount of the package object, or the like.

For this reason, when the timer setting time or the torque setting value is not appropriate, the length of the band wound around the outer circumference of the package object W becomes longer or shorter than the length L of one block 171, so that it is impossible to accurately wind the band 170 around the outer circumference of the package object W on a block-by-block basis.

If there is a deviation between the length of the band wound around the outer circumference of one package object W and the length L of one block, a deviation occurs between the center Wc of the top surface of the package object W and the center 171c of each block 171 of the band 170, and this deviation accumulates in each packing process, so that a significant deviation occurs finally.

In addition, due to such a deviation, cutting of the band 170 subsequent to welding is also performed at a position out of the boundary portion 173 between the adjacent blocks 171, 171. Therefore, part of the printed contents may become unreadable in some cases when printing is partially cut off, or overlapping or welding of the band is applied on the printed portion.

In addition, due to such a deviation of the cutting position, even when packing is started by matching the leading edge 170a of the band 170 and the starting edge 171a of the block 171, the leading edge 170a of the band newly generated by the cutting does not match the leading edge 171a of the block 171, and even thereafter, the band 170 is wound around the package object W while the printing position is deviated.

In order to solve such a packing failure, it is necessary to perform a process of matching the leading edge 170a of the band 170 and the starting edge 171a of the block 171 by cutting the band 170 manually again at the boundary portion 173 between the blocks 171, 171 using scissors or the like. In addition, it is necessary to adjust the count time of the timer in the stroke-based method or adjust the setting torque in the torque-based method. Furthermore, it is necessary to adjust the length of the band wound around the outer circumference of the package object W in one packing operation as close as possible to the length L of one block by repeating these operations. These adjustment works are very cumbersome and difficult.

Note that, in the aforementioned description, advantages obtained by accurately cutting the band at the boundary portion between adjacent blocks and accurately winding the band around the outer circumference of the package object W in units of one block have been described by exemplifying a case where packing is performed by using a printed band 170.

However, the advantages obtained by accurately winding the band 170 around the outer circumference of the package object W on a block-by-block basis could also be obtained even for a band that is not printed.

For example, if the band 170 can be accurately wound around the outer circumference of one package object W on a block 171-by-block 171 basis, the band 170 can be appropriately wound around the outer circumference of the package object W without loosening or excessive tightening.

When the band 170 to be wound around the package object W is a paper band or the like, in general, one side of the paper band is coated with a heat-adhesive resin or laminated with a film of the heat-adhesive resin over its entire length in order to provide heat-adhesiveness.

However, if the band 170 can be accurately wound around the outer circumference of the package object W in units of one block 171, it is only necessary to apply or laminate the heat-adhesive resin to the portions to be welded in each block 171 of the band 170. Therefore, it is possible to remarkably reduce the amount of the applied heat-adhesive resin, and thus contribute to demands for resource saving, which has been strongly demanded in recent years.

Therefore, the present invention has been made to solve the above-mentioned problems of the prior art, and it is an object of the present invention to provide a packing method capable of accurately cutting a band divided into blocks in the longitudinal direction as described above at the boundary portion between blocks, and a packing machine capable of executing the packing method.

### [Means for solving the problem]

Means for solving the problems are described below with reference numerals used in the detailed description of the preferred embodiments. These reference numerals are intended to clarify the correspondence between the descriptions in the claims and the descriptions in the detailed description of the preferred embodiments, and it is needless to say that these reference numerals should not be used to restrictively interpret the technical scope of the present invention.

In order to achieve the above object, a packing method of the present invention for a packing machine 1 including a sealing unit 30 that performs gripping, welding, and cutting of a band 70, and a roller unit 20 that feeds the band 70 pulled out from a band roll 8 to pass through the sealing unit and retracts the fed band 70, the packing method comprises:
using the band 70 divided into blocks 71, 71 each having a length L necessary for one packing of a package object W in a longitudinal direction, and providing a mark 74 such as a registration mark at a predetermined position in each of the blocks 71, 71 of the band 70 so as to detect that a boundary portion 73 between the block 71 having the mark 74 and its adjacent block 71 is placed on a cutting blade 37 provided in the sealing unit 30 when the mark 74 is detected at a predetermined detection position 95 provided on a band feeding path of the packing machine 1; and
a position alignment process of retracting the band 70 by the roller unit 20 from a state of which the band is fed until when at least one of the boundary portions 73 passes over the cutting blade 37, and terminating the retracting when the boundary portion 73 is detected above the cutting blade 37 by detecting the mark 74 at the detection position.

The packing method according to the above configuration may further comprises:
a band supply step of feeding the band 70 pulled out from the band roll 8 by the roller unit 20 so as to pass through the sealing unit 30;
a band tightening step of causing the roller unit 20 to retract the band 70 to wind the band 70 around an outer circumference of the package object W while the package object Wis placed within a loop of the band 70 formed by gripping a leading edge of the band 70 by the sealing unit 30; and
a welding and cutting step of welding and cutting the band 70 by the sealing unit 30 after the band tightening step,
wherein the band 70 of which a leading edge 70a starts at a starting edge 71a of the block 71 is used,
the number N of the marks 74 passed through the detection position 95 in the band supply step is counted, and
the position alignment process is executed by retracting the band 70 until the number of the marks which is one less (N-1) than the number N of the marks 74 counted in the band supply step is detected in the band tightening step, so as to place the boundary portion 73 above the cutting blade 37.

The above packing method may further comprise a band reset process of matching the leading edge 70a of the band 70 with the starting edge 71a of the block 71 in a case that the leading edge 70a of the band 70 does not start at the starting edge 71a of the block 71, and
the band reset process may include the position alignment process and a cutting process of the band performed by using the cutting blade 37 after the position alignment process.

The band reset process may be performed by combining the band supply step, the band tightening step, and the welding and cutting step,
and in such case, the band reset process is performed before the band tightening step after the band supply step,
retracting of the band 70 in the position alignment process of the band reset process is executed until the number of the marks 74 which is one less (N-1) than the count number N of the marks 74 counted in the band supply step is detected, and
the processes subsequent to the band supply step are executed again after the band reset process.

Furthermore, instead of the above configuration, regardless of the number of marks counted in the band supply step, the band reset process may be executed until one of the marks 74 is detected.

In any of the cases described above, the band reset process may be performed in a case that the band 70 is placed at a predetermined position in the sealing unit 30.

In the above packing method, the mark 74 may be a registration mark provided on the band 70.

Furthermore, a packing machine 1 of the present invention for performing the above packing method, provided with a sealing unit 30 that performs gripping, welding, and cutting of a band 70; and a roller unit 20 that feeds the band 70 pulled out from a band roll 8 to pass through the sealing unit 30 and retracts the fed band 70, comprises:
a mark detection means 62 provided at a predetermined detection position 95 on a feeding path of the band 70 to detect a mark 74 provided on the band 70; and
a controller 50 that controls operations of the roller unit 20,
the controller 50 causing the roller unit 20 to execute a position alignment process in which the band 70 is retracted until at least one of the marks 74 is detected at the detection position 95 from a state of which the band 70 is fed until at least one of the marks 74 passes through the detection position.

In the packing machine 1, the controller 50 causes
the roller unit 20 to perform a band supply process of feeding the band 70 pulled out from the band roll 8 to pass through the sealing unit 30, and a band tightening process of retracting the band 70 to wind the band 70 around an outer circumference of a package object W while the package object W is placed within a loop of the band 70 formed by gripping a leading edge of the band 70 by the sealing unit 30, and
the sealing unit 30 to perform a welding and cutting step of welding and cutting the band 70 after the band tightening process of the roller unit 20, and
the controller 50:
   counts and stores the number N of the marks 74 detected at the detection position 95 on the basis of a detection signal of the mark detection means 62 in the course of the band supply process of the roller unit 20;
   counts the number of the marks 74 detected at the detection position 95 on the basis of a detection signal of the mark detection means 62 in the course of the band tightening process of the roller unit 20; and terminates retracting of the band by the roller unit 20 when the number of the marks 74 which is one less (N-1) than the detected number N of the marks 74 counted in the band supply process is detected, so that the band tightening process is terminated while the position alignment process is completed.

The packing machine 1 with the above configurations may employ a configuration further comprising a shooter 90 for guiding the band 70 toward the sealing unit 30,
wherein the shooter 90 includes a plate-shaped inlet guide 91, a plate-shaped guide cover 92 that covers the inlet guide 91, and a band passage (not shown) formed in a gap between the inlet guide 91 and the guide cover 92,
through-holes 91a, 92a are provided in each of corresponding positions of the inlet guide 91 and the guide cover 92,
the positions of the through-holes 91a, 92a are set as the detection positions 95,
the mark detection means 62 is provided so as to face the through-hole 91a, 92a (the through-hole 91a of the inlet guide 91 in the embodiment) of any one of the inlet guide 91 and the guide cover 92, and
the through hole (the through-hole 91a of the inlet guide 91 in the embodiment) is blocked with a glass cover 96.

Furthermore, in the packing machine 1 of the present invention, wherein the controller 50 may be configured to execute a band reset process in which the band 70 is cut at a predetermined position in response to a band reset instruction signal, and
the controller 50 may be configured to cause the roller unit 20 to perform the position alignment process in the band reset process and causes the sealing unit 30 to cut the band 70 after the position alignment process of the roller unit 20.

The controller 50 may be configured to
stop the roller unit 20 and the sealing unit 30 until a packing start instruction is received after the band supply process, so as to set the packing machine 1 in a standby state,
perform a band reset process in which the band 70 is cut at a predetermined position when a band reset instruction is received in the standby state,
cause the roller unit 20 to perform the position alignment process in the band reset process and cause the sealing unit 30 to cut the band 70 having been subjected to the position alignment process of the roller unit 20, and execute the position alignment process of the band reset process on the basis of a detection signal of the mark detection means 62 by causing the roller unit 20 to retract the band 70 until the number N of the marks 74 which is one less (N-1) than the number of the marks 74 detected at the detection position 95 in the band supply process is detected, and
cause the roller unit 20 to perform the band supply process again after the band reset process, so as to return to the standby state.

Instead of the above configuration, the controller 50 may be configured to execute the position alignment process of the band reset process by causing the roller unit 20 to retract the band unit until the mark detection means detects one of the marks.

In the packing machine which enables the above band reset process, the sealing unit 30 may be configured to include a band detection mechanism 63 for detecting the band 70, and
the controller 50 may be configured to execute the band reset process in a case that a detection signal is received from the band detection mechanism 63, and the band reset instruction is received.

The mark 74 detected by the mark detection means 62 may be a registration mark provided on the band 70.

### [Effect of The Invention]

By virtue of the configuration of the present invention described above, in the packing method and the packing machine 1 according to the present invention, it is possible to accurately cut the band 70 at the boundary portion 73 between adjacent blocks 71, 71 by employing the position alignment process described above.

As a result, the supply amount of the band 70 supplied from the roller unit 20 in the band supply step is stored by counting the number N of marks 74 detected at the detection position 95, and the position alignment process described above is executed by retracting the band 70 until the number of marks 74 which is one less (N-1) than the stored count number N of the marks 74 is detected. Then, the boundary portion 73 is placed above the cutting blade 37. Therefore, even when the roller 21 or 22 provided in the roller unit 20 slips, the band 70 loosens, or the package object deforms during tightening of the band 70, it is possible to accurately wind the band 70 around each package object W on a block 71-by-block 71 basis at all times.

As a result, for example, when the printed band 70 is wound around the package object W, it is possible to accurately place a planned printed portion of the band 70 at a planned position on the package object W and wind the band 70 in an accurate position on the package object W.

In addition, since the band 70 is accurately cut at the boundary portion 73 between the first block 71 and the second block 71, it is possible to prevent a packing failure such as part of the print being cut off and becoming invisible.

In addition, when using a paper band, it is sufficient to merely apply or laminate a heat-adhesive resin only to the portion of the overlapped margin provided near the starting edge 71a and/or the terminating edge 71b of each block 71, so that it is possible to remarkably reduce the amount of the applied resin, compared to a case of coating or laminating of the heat-adhesive resin is performed on the entire band 70.

Furthermore, the retracting amount is determined depending on the number of marks 74 counted in the course of the band supply step. Therefore, even when the size of the package object W to be packed is changed, there is no need to perform cumbersome setting works such as setting the count time of the timer or changing the tightening torque setting in response to a change of the package object W. Thus, it is possible to properly wind the band 70 around the package object W by simply replacing the band roll 8 set in the packing machine 1 with one around which a band 70 having a block 71 with a length matching that of the changed package object W is wound.

When the leading edge 70a of the band 70 does not start at the starting edge 71a of the block 71, the position alignment process described above for placing the boundary portion 73 between the two adjacent blocks 71, 71 on the cutting blade 37 of the sealing unit 30 is performed, and then, the band reset process of cutting the band with this cutting blade 37 is performed. Therefore, it is possible to easily match the leading edge 70a of the band 70 and the starting edge 71a of the block 71 without removing the band roll 8 from the packing machine, manually cutting with scissors, or the like.

In a case that this band reset process is executed after the band supply step ends, it is performed until the number of the marks 74 which is one less (N-1) than the number (N) of the marks counted in the band supply step is detected. Therefore, the band 70 is cut to a length as short as possible, so that it is possible to execute the process of matching the leading edge 70a of the band 70 and the starting edge 71a of the block 71 automatically without any manual work while realizing resource saving.

In addition, the alignment in the band reset process is performed by retracting the band 70 until the starting edge 71a of one block 71 passes over the cutting blade 37. Therefore, it is possible to realize the process of aligning the leading edge 70a of the band 70 and the starting edge 71a of the block 71 automatically without a human labor even when the memory of the count number is lost due to turning off the packing machine 1 such as a restarting operation of the packing machine 1.

If the band 70 is retracted while the leading edge 70a of the band 70 has not reached a predetermined position in the sealing unit 30, the band 70 would fall out of the sealing unit 30 or the roller unit 20, so that it may be necessary to perform a cumbersome work of setting the band 70 in the sealing unit 30 or the roller unit 20 again. However, in a case that a band detection mechanism 63 for detecting the band 70 is provided in the sealing unit 30, or the like, and the aforementioned band reset process is performed when it is detected that the band 70 is placed at the predetermined position in the sealing unit 30, it is possible to avoid a cumbersome work such as setting the band 70 in the sealing unit 30 or the roller unit 20 again.

Note that detection of the starting edge 71a of the block 71 described above can be easily performed by providing a registration mark 74 on the band 70 and detecting the registration mark 74.

Note that, in the packing machine for executing the packing method described above, through-holes 91a and 92a are provided at corresponding positions of the inlet guide 91 and the guide cover 92 of the shooter 90 that guides the band 70 toward the sealing unit 30. In addition, the formation positions of the through-hole 91a and 92a are set as the detection positions 95. Furthermore, a mark detecting means 62 is provided to face the through-hole (91a in the embodiment) in any one of the inlet guide 91 and the guide cover 92. In addition, the through-hole (91a in the embodiment) is blocked with a glass cover 96, so that the mark detection means 62 is covered with the glass cover 96. Therefore, it is possible to desirably prevent accumulation of a foreign substance or the like on the mark detection means 62 and occurrence of malfunction or the like.

Moreover, in the configuration in which the mark detection means 62 is provided in the shooter 90 in this manner, even when a foreign substance temporarily accumulates on the glass cover 96 covering a front surface of a sensing portion of the mark detection means 62, this foreign substance is scraped off and removed by the band 70 passing through the shooter 90 at high speed. This also makes it difficult to accumulate a foreign substance.

### BRIEF DESCRIPTION OF THE DRAWINGS

FIG. 1 is a perspective view illustrating a packing machine according to the present invention.
FIG. 2 is a schematic front view illustrating a packing machine according to the present invention.
FIG. 3 is an explanatory diagram illustrating a roller unit and a sealing unit.
FIG. 3-1 is an exploded perspective view illustrating a shooter.
FIG. 4A is an explanatory diagram illustrating the operation of the sealing unit showing an initial state.
FIG. 4B is an explanatory diagram illustrating the operation of the sealing unit showing the state in which the leading edge of the band is gripped as the front damper (right pressing) ascends.
FIG. 4C is an explanatory diagram illustrating the operation of the sealing unit showing the state in which the band is prevented from loosening as the rear damper (left pressing) ascends.
FIG. 4D is an explanatory diagram illustrating the operation of the sealing unit showing the state in which the band is welded and cut as the press head (middle pressing) ascends.
FIG. 5 is a schematic cross-sectional view taken along line V-V of FIG. 2.
FIG. 6 is a block diagram illustrating a packing machine according to a configuration of the present invention.
FIG. 7 is an explanatory diagram illustrating a band used in the packing method according to the present invention.
FIG. 8 is a flow chart illustrating a band supply step in a packing method according to an embodiment of the present invention.
FIG. 9 is a flow chart illustrating a band tightening step in the packing method according to an embodiment of the present invention.
FIG. 10 is a flowchart illustrating a band reset process in the packing method according to an embodiment of the present invention.
FIG. 11 is an explanatory diagram illustrating a conventional packing machine (strapping machine).
FIG. 12 is an image diagram illustrating strapping for a food packaging container (three layers overlapping).
FIG. 13 is an explanatory diagram illustrating a desirable positional relationship between a package object and a band (block).

### [Embodiments for carrying out the invention]

A packing method and a packing machine 1 according to the present invention will now be described with reference to the accompanying drawings.

Note that the packing machine 1 according to the present invention described below has a band guide arch 40, and a so-called "fully automatic type" packing machine configuration example will be described, in which a leading edge of a band 70 supplied by a roller unit 20 is guided by the band guide arch 40 and is automatically introduced and held at a predetermined position of a sealing unit 30.

However, the configuration of the packing machine according to the present invention is not limited to the illustrated embodiment, and is also applicable to a so-called "semiautomatic" packing machine known in the art, in which the band guide arch 40 is not provided on the table 7, and an operator manually grips the leading edge of the band 70 fed to the table 7 by the roller unit 20 and inserts it to a predetermined position of the sealing unit 30.

### [Overall Structure of Packing Machine]

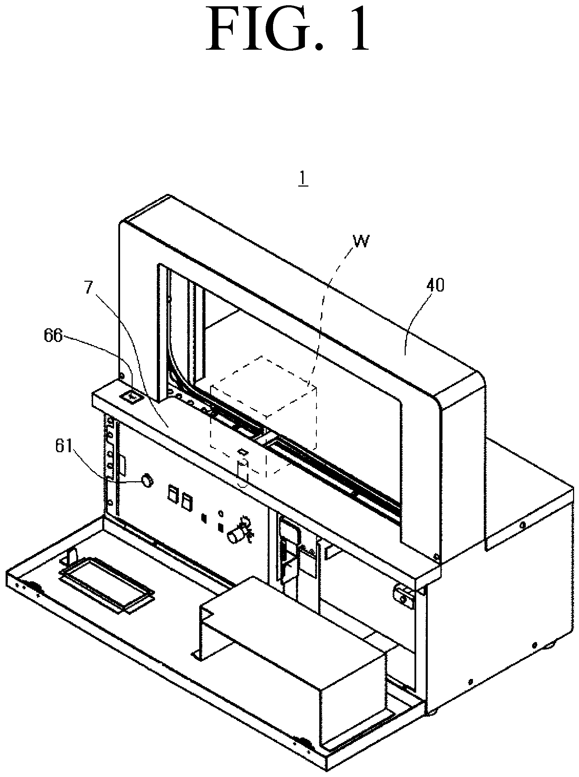

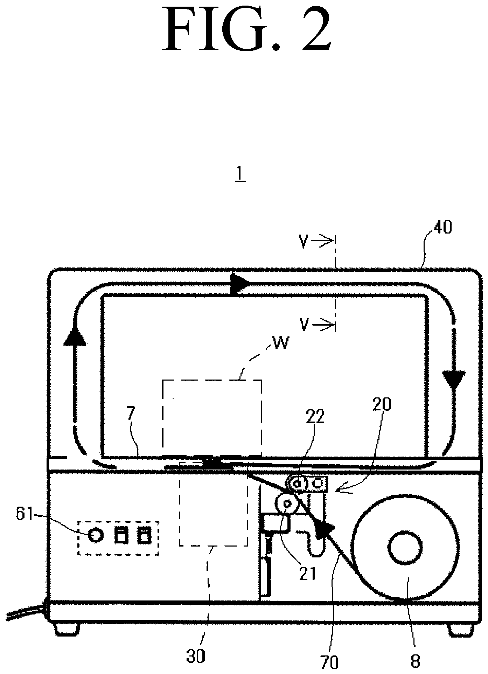

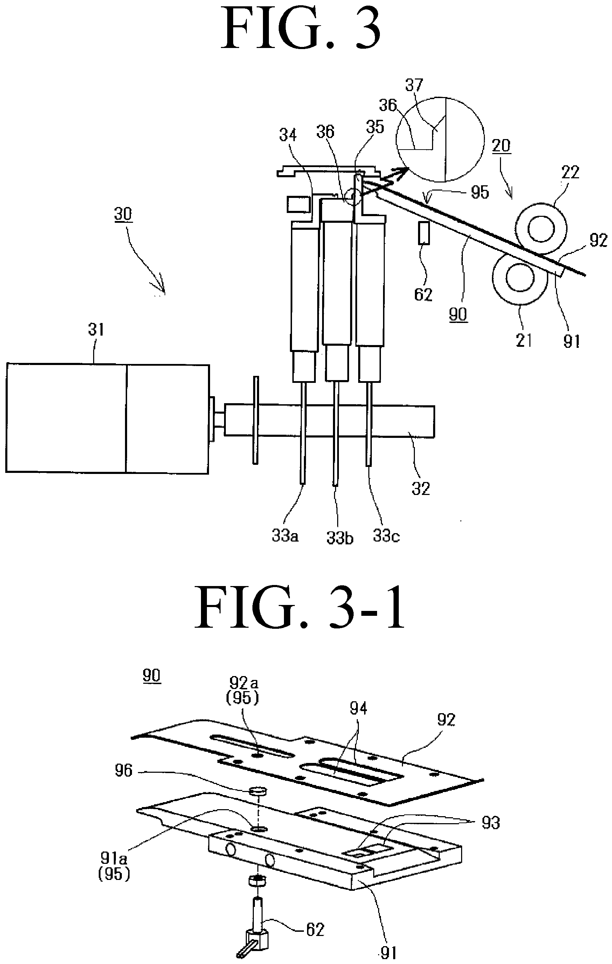

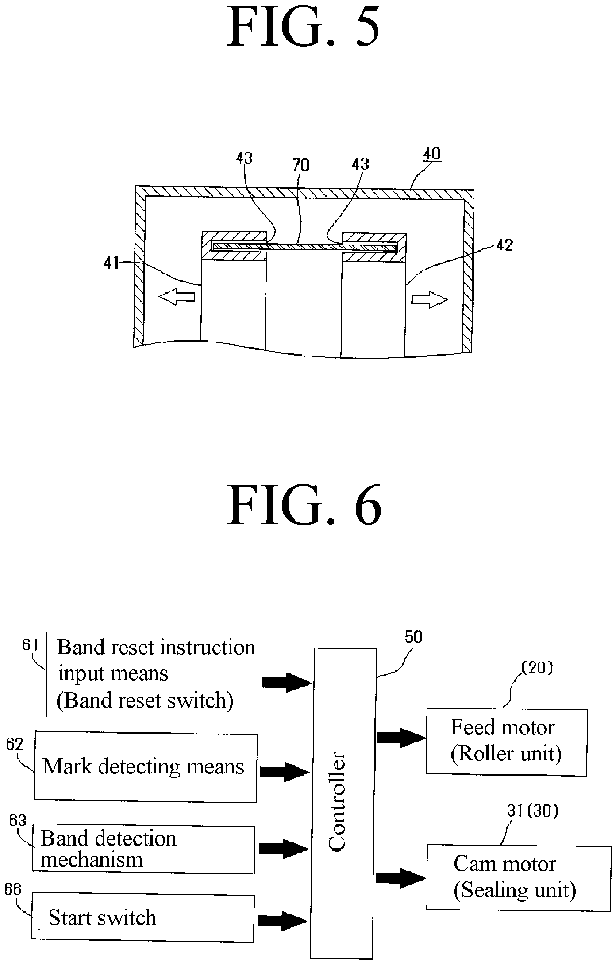

Referring to FIGS. 1 and 2, reference numeral "1" refers to a packing machine according to the present invention. This packing machine 1 has a table 7 on which a package object W is placed, and a band roll 8 around which a band 70 made of, for example, an OPP film is wound (see FIG. 2). In addition, the packing machine 1 has a roller unit 20 (see FIGS. 2 and 3) that pulls out the band 70 from the band roll 8, feeds it into the band guide arch 40 straddled over the table 7, retracts and tightens the band 70 that has been fed, a sealing unit 30 (see FIGS. 2 and 3) arranged below the table 7 for holding the leading edge of the band 70 fed by the roller unit 20 and cutting and welding the band 70, and a controller 50 (see FIG. 6) having an electronic control unit for controlling the operations of the roller unit 20 and the sealing unit 30 .

### [Roller Unit]

In the packing machine 1 according to the present invention, the aforementioned roller unit 20, which supplies the band 70 and retracts the supplied band 70 to wind the band 70 around the outer circumference of the package object W, includes a drive roller 21 and a touch roller 22 coming into contact with the outer circumference of the drive roller 21 as shown in FIGS. 2 and 3.

The rotation shaft of the drive roller 21 is coupled to a feed motor (not shown), and the feed motor rotates the drive roller 21 in a supply rotation direction which is the counterclockwise direction on the drawing and in the tightening rotation direction which is the clockwise direction on the drawing.

In addition, the touch roller 22 described above is arranged touchable to the drive roller 21. As the band passes between the drive roller 21 and the touch roller 22, the band is fed to the table 7 by rotating the drive roller 21 in the supply rotation direction, and the fed band is retracted by rotating the drive roller 21 in the tightening rotation direction.

In the configuration of FIG. 3, a shooter 90 is provided between the drive roller 21 and the touch roller 22 of the roller unit 20, and the band 70 pulled out from the band roll 8 by the roller unit 20 is introduced into the sealing unit 30 described below through the shooter 90.

As shown in FIGS. 3 and 3-1, the shooter 90 includes a plate-like inlet guide 91 and a plate-like guide cover 92 covering the inlet guide 91. A band passage is provided in a gap between the inlet guide 91 and the guide cover 92. A contact hole 93 provided in the inlet guide 91 and a slit 94 provided in the guide cover 92 provided to a corresponding position. The drive roller 21 arranged under the shooter 90 and the touch roller 22 arranged over the shooter 90 rotate in a contact manner through the contact hole 93 and the slit 94 while interposing the band 70 introduced into the band passage, so that the band 70 can be supplied and pulled back or retracted.

In this embodiment, through-holes 91a and 92a are provided in corresponding positions of the inlet guide 91 and the guide cover 92, and the formation positions of the through-holes 91a and 92a are set as the detection position 95 of the mark (registration mark) 74 provided in the band described below. In addition, a mark detection means 62 for detecting a mark (registration mark) 74 is provided in the shooter 90 (the lower surface of the shooter 90 in this embodiment) to face the through-hole of any one of the inlet guide 91 and the guide cover 92 (the through-hole 91a of the inlet guide 91 in this embodiment). Moreover, the through-hole (the through hole 91a of the inlet guide 91 in this embodiment) is covered with the glass cover 96. Therefore, it is possible to detect the mark (registration mark) 74 provided on the band 70 while preventing accumulation of a foreign substance on the mark detection means 62.

### [Sealing Unit]

The band 70 pulled out from the band roll 8 by the roller unit 20 described above passes through the shooter 90 and the sealing unit 30 and is fed to the table 7. In addition, the band 70 is guided through the inside of the band guide arch 40 straddled over the table 7 to form a band loop over the table 7. Then, the leading edge of the band 70 is introduced into a predetermined position of the sealing unit 30 again and is gripped.

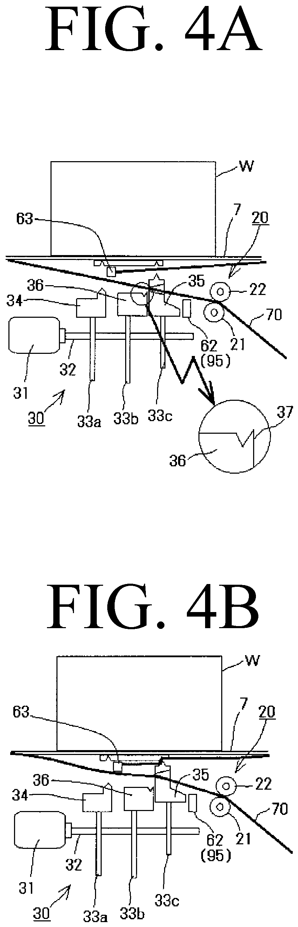

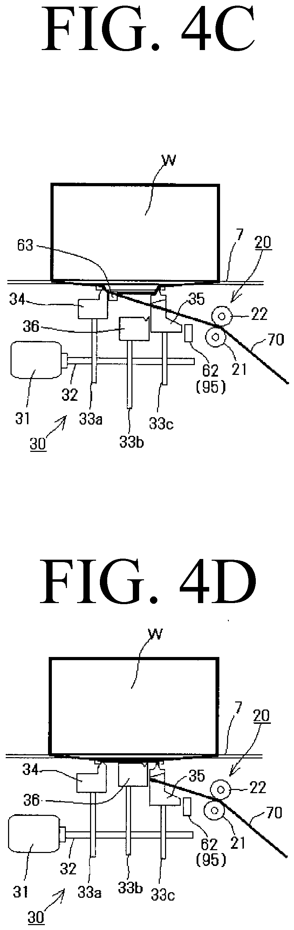

As shown in FIGS. 3 and 4, the sealing unit 30 includes a cam motor 31, a cam shaft 32 rotated by the cam motor 31, cams 33a to 33c rotating together with the cam shaft 32, a rear damper (left presser) 34 lifted or lowered by the cams 33a to 33c, a front damper (right presser) 35, a press head (center presser) 36 having a cutting blade 37, and a heater (not shown), so as to perform gripping, welding, and cutting of the band 70.

In this sealing unit 30, all of the rear damper 34, the front damper 35, and the press head 36 are lowered at their initial positions (see FIG. 4A). From these positions, the cam motor 31 rotates the camshaft 32 to grip the leading edge of the band by lifting the front damper 35 (FIG. 4B), grip the band 70 by lifting the rear damper 34 after band tightening (FIG. 4C), and perform welding and cutting of the band by lifting the press head 36 (FIG. 4D). Then, the rear damper 34, the front damper 35, and the press head 36 are returned to their lowered initial positions (FIG. 4A).

### [Band Guide Arch]

A band guide arch 40 straddled across the longitudinal direction of the table 7 is provided over the table 7.

The band 70 pulled out and fed from the band roll 8 by the roller unit 20 passes through the sealing unit 30 and is then introduced into the band guide arch 40 so as to form a loop over the table 7. In addition, its leading edge is again introduced into the sealing unit 30 and is gripped by the lifting the front damper (right presser) 35 of the sealing unit 30.

The band guide arch 40 has a pair of guide rails 41 and 42 having a slit 43 having a U-shaped cross section as shown in FIG. 5. By arranging the guide rails 41 and 42 to allow the openings of the slits 43 to face each other, a predetermined range of the band 70 from both ends to the center of the width direction is inserted into the slits 43 and 43, so that it can pass through the inside of the band guide arch 40.

A pair of guide rails 41 and 42 are configured to widen the gap when the band 70 is retracted by the roller unit 20 described above. As a result, when the band is tightened by the roller unit 20, the band 70 can reliably fall from the band guide arch 40 and can be wound around the outer circumference of the package object W placed on the table 7.

Note that, as a structure of the band guide arch 40, any structure known in the art may be employed without limiting to those described above, as long as the band 70 can be guided to form a loop over the table 7, and the band 70 can smoothly fall during tightening of the band 70 by the roller unit 20.

In addition, in the packing method according to the present invention, the band guide arch 40 described above is not indispensable. Instead, without providing the band guide arch 40, an operator may manually insert the leading edge of the band 70 fed to the table 7 by the roller unit 20 into the slot or the like provided in the sealing unit 30.

### [Band]

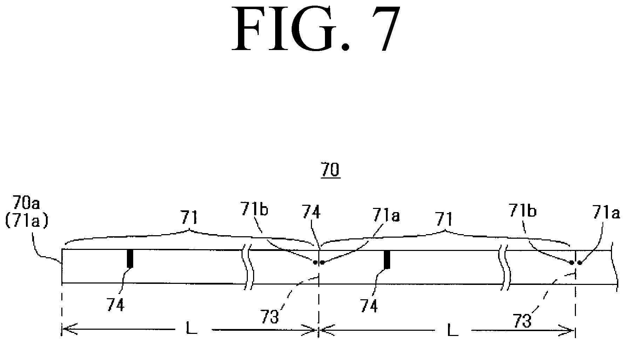

As shown in FIG. 7, the band 70 used in the packing method and packing machine according to the present invention is divided into blocks 71, 71 each having a length L required for one packing of the package object W in its longitudinal direction.

Each block 71 of the band 70 has a mark for indicating a boundary portion 73 between two adjacent blocks 71, 71. In this embodiment, as such a mark, a mark called a registration mark or an eye mark (herein, referred to as "registration mark") 74 is printed.

The print position of the registration mark 74 is set such that, when the aforementioned registration mark 74 is detected at a detection position 95 provided at a predetermined position (the shooter 90 in this embodiment) on the band feeding path of the packing machine 1 described above, the boundary portion 73 between the block 71 having this registration mark 74 and the adjacent block 71 is placed above the cutting blade 37 provided in the sealing unit 30.

In this embodiment, the detection position 95 described above is provided in the shooter 90 that introduces the band 70 into the sealing unit 30, and the registration mark 74 is printed on a position where, by detecting the registration mark 74 at this detection position 95, it can be detected that the boundary portion 73 between the block 71 provided with the registration mark 74 and the block 71 immediately preceding the block 71 is placed above the cutting blade 37.

However, the print position of the registration mark 74 may be changed as appropriate in relation to the detection position 95 without limiting to those illustrated, as long as it can be detected that the boundary portion 73 between adjacent blocks 71 is placed above the cutting blade 37 provided in the sealing unit 30.

### [Switches and Detectors]

As shown in FIG. 6, the packing machine 1 according to this embodiment has switches and detectors as described below.

### (1) Band reset switch (band reset instruction input means)

The band reset switch 61 is a switch that instructs the controller 50 to start a band reset process. In this embodiment, a push-button type of momentary switch is provided on the front panel of the packing machine 1 as the band reset switch 61 (see FIGS. 1 and 2).

If the leading edge 70a of the band 70 does not start at the starting edge 71a of the first block 71 provided in the band 70, an operator presses the band reset switch 61 to instruct the controller 50 to start the band reset process. As a result, the controller 50 causes the roller unit 20 to perform a position alignment process of placing the boundary portion 73 between the two blocks 71, 71 of the band 70 above the cutting blade 37 provided in the sealing unit 30, and causes the sealing unit 30 to cut the band 70 with the cutting blade 37, so that the band reset process of matching the leading edge 70a of the band 70 newly generated by the cutting with the starting edge 71a of the block 71 is executed.

### (2) Mark detection means

Various detection means, such as a proximity sensor, known in the art may be employed as the mark detection means 62, as long as it detects the mark 74 provided on the band 70 at the detection position 95 provided on the band feeding path. In this embodiment, for example, an optical sensor is used to detect the aforementioned registration mark 74 provided as a mark on each block 71 of the band 70.

Note that, in the configuration of this embodiment in which the mark detection means 62 is arranged at the detection position 95 provided in the shooter 90 that introduces the band 70 into the sealing unit 30, the registration mark 74 is printed on a position separated by an interval corresponding to the interval between the cutting blade 37 of the sealing unit 30 and the detection positions 95 with respect to the starting edge 71a of each block 71.

As a result, when the registration mark 74 is detected at the detection position 95, the boundary portion 73 between the block 71 having this registration mark 74 and the immediately preceding block 71 is placed above the cutting blade 37.

Note that the configuration described above may be changed to detect any other mark instead of the registration mark 74 without limiting to those described above, as long as it can be detected that the boundary portion between the adjacent blocks 71, 71 is placed above the cutting blade 37.

In addition, as described above, the print position of the registration mark 74 for each block 71 of the band 70 may also be appropriately changed depending on the detection position 95 and the arrangement of the mark detection means 62.

### (3) Band detection mechanism

The band detection mechanism 63 is to detect whether or not the band 70 exists at a predetermined position of the sealing unit 30. In this embodiment, as shown in FIG. 4, a proximity sensor is provided at a portion of the sealing unit 30 where the leading edge 70a of the band 70 abuts, and this proximity sensor is used as the aforementioned band detection mechanism 63 that detects whether or not the leading edge of the band 70 is introduced into a predetermined position of the sealing unit 30.

However, this band detection mechanism 63 is not limited to the configuration described above in which the band is detected by the proximity sensor or other sensors. For example, detection of the band placed at a predetermined position may be performed by counting the rotation amount of the feed motor on the basis of a timer or pulse and detecting that a feed amount of the band reaches a predetermined length. In addition, various configurations known in the art may be employed as long as it can be detected that the band 70 is placed at a predetermined position of the sealing unit 30.

### (4) Start switch

The start switch 66 is a switch for instructing the controller 50 to start the processes subsequent to the band tightening step when the roller unit 20 and the sealing unit 30 stop, and the packing machine 1 becomes a standby state after the band supply step. In this embodiment, a push-button type of momentary switch is provided on the top surface of the table 7 as the start switch 66 (see FIG. 1).

### [Controller]

Note that, as shown in FIG. 6, the packing machine 1 according to the present invention has a controller 50 including an electronic control device. This controller 50 controls the operation of the feed motor provided in the roller unit 20 or the cam motor 31 provided in the sealing unit 30 on the basis of an instruction input by operating each switch described above and a detection signal from detection devices, so as to execute the packing method according to the present invention by causing each unit to perform the operations described below.

### [Description of Operations]

### (1) Band supply step

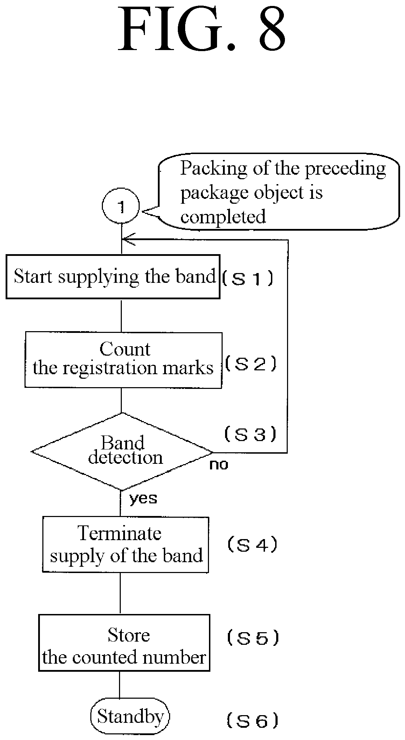

As the packing of the preceding package object is completed, the controller 50 prepares for the packaging of the next package object W, and rotates the drive roller 21 of the roller unit 20 in the supply rotation direction to start supplying the band 70 (FIG. 8: S1).

As the supply of the band 70 by the roller unit 20 starts, the controller 50 counts the number of marks 74 (the number of registration marks in this embodiment) detected at the detection position 95 in response to passing of the band 70 on the basis of the detection signal from the mark detection means 62 (FIG. 8: S2).

In addition, while the band is supplied by the roller unit 20, the controller 50 monitors whether or not the leading edge 70a of the band 70 passes through the band guide arch 40 and reaches a predetermined position of the sealing unit 30 on the basis of the detection signal from the band detection mechanism 63 provided in the sealing unit 30 (FIG. 8: S3). When the leading edge 70a of the band 70 reaches the predetermined position of the sealing unit 30, and the band 70 is detected by the band detection mechanism 63 (YES in S3), the controller 50 stops the rotation of the drive roller 21 in the supply rotation direction to terminate supply of the band 70 (FIG. 8: S4). In addition, the controller 50 stores the counted registration mark detection number (FIG. 8: S5), and stops the roller unit 20 and the sealing unit 30 to enter the standby state (FIG. 8: S6).

Then, the band 70 pulled out from the band roll 8 by the roller unit 20 passes through the sealing unit 30 and then the band guide arch 40, and its leading edge is again introduced into the sealing unit 30, so as to form a band loop over the table 7.

### (2) Band tightening step

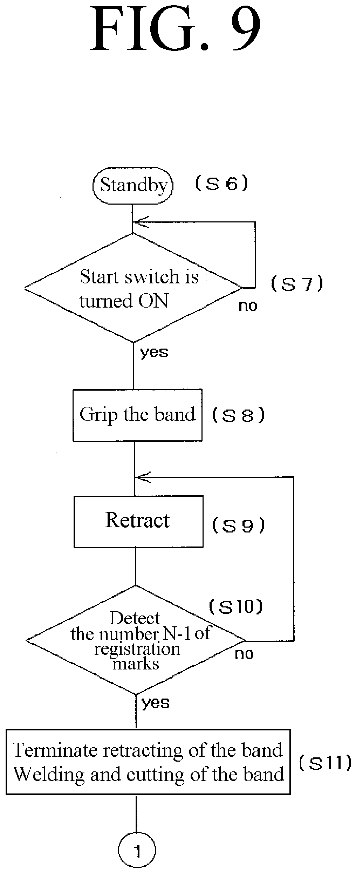

In the standby state (S6 in FIGS. 8 and 9) after the band supply step described above is terminated, when the package object W is placed on the table 7, and the start switch 66 is turned on (FIG. 9: YES in S7), the controller 50 operates the cam motor 31 of the sealing unit 30 to grip the leading edge of the band 70 by lifting the front damper (right presser) 35 (see S8 in FIG. 9 and FIG. 4B). In addition, the drive roller 21 of the roller unit 20 is rotated in the tightening rotation direction to start retracting of the band 70 (FIG. 9: S9).

During this band retracting operation, the controller 50 counts the number of registration marks 74 detected at the detection position 95 on the basis of the detection signal from the mark detection means 62. The roller unit 20 continues to retract the band 70 until the number of the registration marks 74 which is one less (N-1) than the number N of the registration marks 74 counted in the course of supplying of the band is detected.

Then, when the number of the registration marks 74 which is one less (N-1) than the number N of registration marks 74 detected in the course of supplying the band is detected (FIG. 9: YES in S10), the controller 50 operates the cam motor 31 of the sealing unit 30 to lift the rear damper (left presser) 34 so as to grip the band 70 without loosening. In addition, rotation of the drive roller 21 of the roller unit 20 stops to terminate retracting of the band, and the press head (center presser) 36 of the sealing unit 30 is lifted, then welding and cutting of the band 70 are performed (see FIG. 9: S 11, FIGS. 4(C) and 4(D)).

As described above, retracting of the band 70 stops when the number of registration marks 74 which is one less (N-1) than the number of registration marks N counted in the course of supplying the band is detected at the detection position 95. As a result, a boundary portion 73 between the first block 71 and the second block 71 with respect to the leading edge 70a of the band 70 is placed above the cutting blade 37.

Therefore, by lifting the press head 36 of the sealing unit 30 in this state and welding and cutting the band 70, the band 70 corresponding to one block 71 can be accurately wound around the outer circumference of the package object W.

When the packing of the package object W is completed in this manner, the controller 50 performs the band supply step described with reference to FIG. 8 and stops the roller unit 20 and the sealing unit 30 to make the packing machine 1 in a standby state.

### (3) Band reset process

If the band 70 is cut out of the boundary portion 73 between two adjacent blocks 71, 71 because of a failure in winding the band 70 around the outer circumference of the package object W, or the like due to improper packing in the band tightening step described above, or the like, the leading edge 70a of the band 70 does not start at the starting edge 71a of block 71, so that it is impossible to accurately wind the band corresponding to one block 71 around the package object W.

Therefore, in this case, an operator instructs the controller 50 to execute the band reset process.

This band reset process can be performed, for example, when the packing machine 1 is in the standby state after the band supply step.

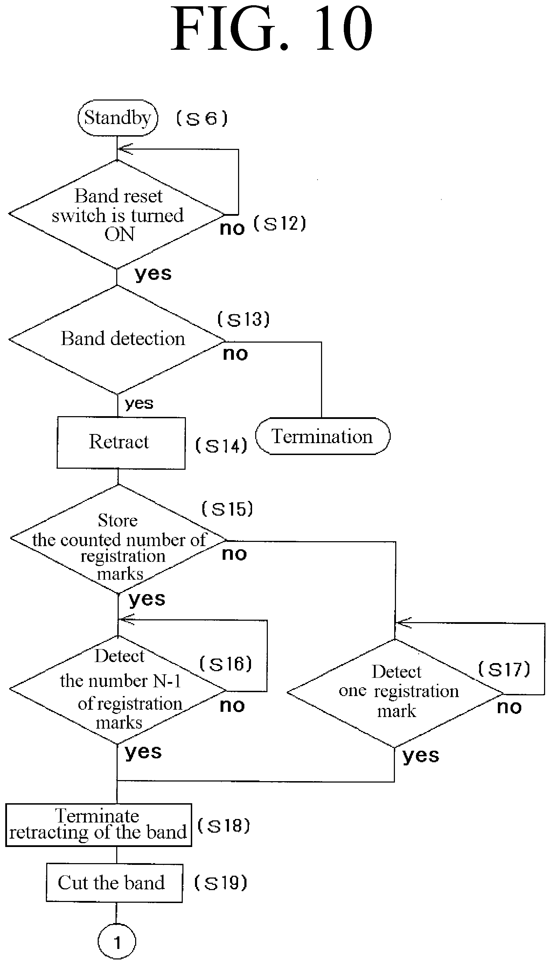

If the operator operates the band reset switch 61 to instruct the controller 50 to execute the band reset process in such a standby state (FIG. 10: YES in S12), the controller 50 determines whether or not the band 70 is placed at a predetermined position of the sealing unit 30 on the basis of the detection signal from the band detection mechanism 63. In case the band 70 cannot be detected (FIG. 10: NO in S13), the band reset process is terminated.

In this case, the operator operates a band feed switch (not shown) provided in the packing machine or the like to instruct the controller 50 to feed the band. After the band 70 reaches a predetermined position of the sealing unit 30, the operator operates the band reset switch 61 again to instruct the controller 50 to execute the band reset process.

Meanwhile, if the band 70 is detected by the band detection mechanism 63 (FIG. 10: YES in S13), the controller 50 rotates the drive roller 21 of the roller unit 20 in the tightening rotation direction to start retracting of the band (FIG. 10: S14).

In a case that the count number N of registration marks detected in the band supply step has been stored (FIG. 10: YES in S15), the controller 50 monitors whether or not the number of the registration marks 74 which is one less (N-1) than the stored count number N is detected in the course of retracting on the basis of the detection signal of the mark detection means 62 (FIG. 10: S16). When the number of the registration marks which is one less (N-1) than the stored count number N is detected, retracting of the band is terminated (FIG. 10: S16 YES 4 S18).

Meanwhile, similar to the standby state performed when the packing machine 1 is turned off and then restarted, the band supply step is terminated when the band 70 passing through the band guide arch 40 is placed at a predetermined position in the sealing unit 30. However, when the memory of the count number N of the registration marks 74 counted in the band supply step before turning off the power is lost, the controller 50 monitors whether or not one registration mark is detected in the course of retracting on the basis of the signal from the mark detection means 62 (FIG. 10: S17). If one registration mark 74 is detected, retracting of the band 70 is terminated (FIG. 10: YES in S17 → S18).

By terminating retracting of the band at the aforementioned timing, the boundary portion 73 between two adjacent blocks 71, 71 of the band 70 is placed above the cutting blade 37 of the sealing unit 30. Therefore, by lifting the press head 36 of the sealing unit 30 in this state and cutting the band with the cutting blade 37 provided in the press head 36 (FIG. 10: S19), it is possible to match the leading edge 70a of the band 70 newly generated by this cutting with the starting edge 71a of the block 71.

After the band reset process of matching the leading edge 70a of the band 70 with the starting edge 71a of the block 71 in this manner, the controller 50 executes the band supply step (S1 to S5 in FIG. 8) described with reference to FIG. 8. Then, the controller 50 stops the roller unit 20 and the sealing unit 30 and is set to a standby state until the next package object W is placed on the packing machine 1.

Note that, in this embodiment, the band reset process is executed when the edge of the band 70 is detected by the band detection mechanism 63, that is, when the band 70 is detected at a predetermined position in the sealing unit 30. Alternatively, the controller 50 may execute the band reset process by operating the band reset switch 61 regardless of whether or not the band 70 is detected at a predetermined position in the sealing unit 30.

However, if the band 70 is retracted while the band 70 is not detected by the band detection mechanism 63, that is, while the leading edge of the band 70 is not placed at the predetermined position of the sealing unit 30, the band 70 may fall out of the sealing unit 30 or the roller unit 20. In this case, it is necessary to perform a cumbersome work such as setting the missing band 70 again in the sealing unit 30 or the roller unit 20. Therefore, as described in this embodiment, it is preferable that the band reset process is not performed when the band detection mechanism 63 does not detect the band 70.

### [Description of Reference Numerals]

- 1: Packing machine
- 7: Table
- 8: Band roll
- 20: Roller unit
- 21: Drive roller
- 22: Touch roller
- 30: Sealing unit
- 31: Cam motor
- 32: Cam shaft
- 33a to 33c: Cam
- 34: Rear damper (left presser)
- 35: Front damper (right presser)
- 36: Press head (center presser)
- 37: Cutting blade
- 40: Band guide arch
- 41,42: Guide rails
- 43: Slit
- 50: Controller
- 61: Band reset switch (Band reset instruction input means)
- 62: Mark detection means
- 63: Band detection mechanism
- 66: Start switch (Packing start instruction input means)
- 70: Band
- 70a: Leading edge (of Band 70)
- 71: Block
- 71a: Starting edge (of Block 71)
- 71b: Terminating edge (of Block 71)
- 73: Boundary portion (between Blocks 71, 71)
- 74: Marks (Registration mark)
- 80: Window
- 90: Shooter
- 91: Inlet guide
- 91a: Through-hole
- 92: Guide cover
- 92a: Through-hole
- 93: Contact hole
- 94: Slit
- 95: Detection position
- 96: Glass cover
- 100: Packing machine
- 107: Table
- 108: Band roll
- 120: Roller unit
- 130: Sealing unit
- 140: Band guide arch
- 170: Band
- 170a: Leading edge (of Band 170)
- 171: Block
- 171a: Starting edge (of Block 171)
- 171c: Center of block
- 173: Boundary portion (between Blocks 171, 171)
- W: Package object
- Wc: Center of top surface of Package object W

## Claims

1. A packing method for a packing machine including a sealing unit that performs gripping, welding, and cutting of a band, and a roller unit that feeds the band pulled out from a band roll to pass through the sealing unit and retracts the fed band, the packing method comprising:
using the band divided into blocks each having a length necessary for one packing of a package object in a longitudinal direction, and providing a mark at a predetermined position in each of the block of the band so as to detect that a boundary portion between the block having the mark and its adjacent block is placed above a cutting blade provided in the sealing unit when the mark is detected at a predetermined detection position provided on a band feeding path of the packing machine; and
a position alignment process of retracting the band by the roller unit from a state of which the band is fed until when at least one of the boundary portions passes over the cutting blade, and terminating the retracting when the boundary portion is detected above the cutting blade by detecting the mark at the detection position.

2. The packing method according to claim 1, further comprising:
a band supply step of feeding the band pulled out from the band roll by the roller unit so as to pass through the sealing unit;
a band tightening step of causing the roller unit to retract the band to wind the band around an outer circumference of the package object while the package object is placed within a loop of the band formed by gripping a leading edge of the band by the sealing unit; and
a welding and cutting step of welding and cutting the band by the sealing unit after the band tightening step,
wherein the band of which a leading edge starts at a starting edge of the block is used,
the number of the marks detected at the detection position in the band supply step is counted, and
the position alignment process is executed by retracting the band until the number of the marks which is one less than the number of the marks counted in the band supply step is detected in the band tightening step, so as to place the boundary portion above the cutting blade.

3. The packing method according to claim 1, further comprising a band reset process of matching the leading edge of the band with the starting edge of the block in a case that the leading edge of the band does not start at the starting edge of the block,
wherein the band reset process includes the position alignment process and a cutting process of the band performed by using the cutting blade after the position alignment process.

4. The packing method according to claim 2, further comprising a band reset process of matching the leading edge of the band with the starting edge of the block in a case that the leading edge of the band does not start at the starting edge of the block,
wherein the band reset process includes the position alignment process and a cutting process of the band performed by using the cutting blade after the position alignment process,
the band reset process is performed before the band tightening step after the band supply step,
retracting of the band in the position alignment process of the band reset process is executed until the number of the marks which is one less than the count number of the marks detected in the band supply step is detected, and
the processes subsequent to the band supply step are executed again after the band reset process.

5. The packing method according to claim 2, further comprising a band reset process of matching the leading edge of the band with the starting edge of the block in a case that the leading edge of the band does not start at the starting edge of the block,
wherein the band reset process includes the position alignment process and a cutting process of the band performed by using the cutting blade after the position alignment process,
the band reset process is performed before the band tightening step after the band supply step,
retracting of the band in the position alignment process of the band reset process is executed until one of the marks is detected, and
the processes subsequent to the band supply step are executed again after the band reset process.

6. The packing method according to any one of claims 3 to 5, wherein the band reset process is performed in a case that the band is placed at a predetermined position in the sealing unit.

7. The packing method according to any one of claims 1 to 5, wherein the mark is a registration mark provided on the band.

8. A packing machine provided with a sealing unit that performs gripping, welding, and cutting of a band; and a roller unit that feeds the band pulled out from a band roll to pass through the sealing unit and retracts the fed band;
the packing machine comprising:
a mark detection means provided at a predetermined detection position on a feeding path of the band to detect a mark provided on the band; and
a controller that controls operations of the roller unit,
the controller causing the roller unit to execute a position alignment process in which the band is retracted until at least one of the marks is detected at the detection position from a state of which the band is fed until at least one of the marks passes through the detection position.

9. The packing machine according to claim 8, wherein the controller causes
the roller unit to perform a band supply process of feeding the band pulled out from the band roll to pass through the sealing unit, and a band tightening process of retracting the band to wind the band around an outer circumference of a package object while the package object is placed within a loop of the band formed by gripping a leading edge of the band by the sealing unit, and
the sealing unit to perform a welding and cutting step of welding and cutting the band after the band tightening process of the roller unit, and
the controller:
counts and stores the number of the marks detected at the detection position on the basis of a detection signal of the mark detection means in the course of the band supply process of the roller unit;
counts the number of the marks detected at the detection position on the basis of a detection signal of the mark detection means in the course of the band tightening process of the roller unit; and terminates retracting of the band by the roller unit when the number of the marks which is one less than the number of the marks detected in the band supply process is detected, so that the band tightening process is terminated while the position alignment process is completed.

10. The packing machine according to claim 8, further comprising a shooter for guiding the band toward the sealing unit,
wherein the shooter includes a plate-shaped inlet guide, a plate-shaped guide cover that covers the inlet guide, and a band passage formed in a gap between the inlet guide and the guide cover,
through-holes are provided in each of corresponding positions of the inlet guide and the guide cover, the positions of the through-holes are set as the detection positions,
the mark detection means is provided so as to face the through-hole of any one of the inlet guide and the guide cover, and the through hole is blocked with a glass cover.

11. The packing machine according to claim 8, wherein the controller is configured to execute a band reset process in which the band is cut at a predetermined position in response to a band reset instruction signal, and
the controller causes the roller unit to perform the position alignment process in the band reset process and causes the sealing unit to cut the band after the position alignment process of the roller unit.

12. The packing machine according to claim 9, wherein the controller is configured to
stop the roller unit and the sealing unit until a packing start instruction is received after the band supply process, so as to set the packing machine in a standby state,
perform a band reset process in which the band is cut at a predetermined position when a band reset instruction is received in the standby state,
cause the roller unit to perform the position alignment process in the band reset process and cause the sealing unit to cut the band having been subjected to the position alignment process of the roller unit,
execute the position alignment process of the band reset process on the basis of a detection signal of the mark detection means by causing the roller unit to retract the band until the number of the marks which is one less than the number of the marks detected at the detection position in the band supply process is detected, and
cause the roller unit to perform the band supply process again after the band reset process, so as to return to the standby state.

13. The packing machine according to claim 9, wherein the controller is configured to
stop the roller unit and the sealing unit until a packing start instruction is received after the start of the packing machine, so as to set the packing machine in a standby state,
perform a band reset process in which the band is cut at a predetermined position when a band reset instruction is received in the standby state,
cause the roller unit to perform the position alignment process in the band reset process and cause the sealing unit to cut the band having been subjected to the position alignment process of the roller unit,
execute the position alignment process of the band reset process by causing the roller unit to retract the band unit until the mark detection means detects one of the marks, and
cause the roller unit and the sealing unit to perform processes subsequent to the band supply process after executing the band reset process.

14. The packing machine according to claim 12 or 13, wherein the sealing unit includes a band detection mechanism for detecting the band, and
the controller executes the band reset process in a case that a detection signal is received from the band detection mechanism, and the band reset instruction is received.

15. The packing machine according to any one of claims 9 to 13, wherein the mark detected by the mark detection means is a registration mark provided on the band.
